Europäisches Patentamt

**European Patent Office**

Office européen des brevets

(11) Numéro de publication: **0 043 313**
**B1**

(12) **FASCICULE DE BREVET EUROPEEN**

(45) Date de publication du fascicule du brevet: **18.12.85**

(51) Int. Cl.⁴: **G 01 T 5/06, G 01 T 1/40**

(21) Numéro de dépôt: **81400999.9**

(22) Date de dépôt: **22.06.81**

(54) **Procédé et dispositif de mesure de rayons gamma dans un sondage.**

(30) Priorité: **25.06.80 FR 8014066**

(43) Date de publication de la demande:
**06.01.82 Bulletin 82/01**

(45) Mention de la délivrance du brevet:
**18.12.85 Bulletin 85/51**

(84) Etats contractants désignés:
**DE FR GB IT NL**

(56) Documents cités:
**FR-A-2 077 483**
**FR-A-2 379 694**
**US-A-3 101 409**
**US-A-3 767 921**
**US-A-3 829 686**
**US-A-3 976 878**

**IEEE TRANSACTIONS ON NUCLEAR SCIENCE,
vol. NS-17, no. 1, février 1970 New York, US
J.S. HEWITT: "On the resolution function for
digitally stabilized nuclear spectrometers",
pages 242-251**

(73) Titulaire: **SOCIETE DE PROSPECTION
ELECTRIQUE SCHLUMBERGER
42, rue Saint-Dominique
F-75340 Paris Cedex 07 (FR)**
(84) **FR IT**

(73) Titulaire: **Schlumberger Limited
277 Park Avenue
New York, N.Y. 10172 (US)**
(84) **DE GB NL**

(72) Inventeur: **Seeman, Bronislaw
93 Route des Gardes
F-92190 Meudon (FR)**

(74) Mandataire: **Chareyron, Lucien et al
Schlumberger Limited Service Brevets c/o Giers
12, place des Etats Unis B.P. 121
F-92124 Montrouge Cédex (FR)**

EP 0 043 313 B1

## Description

L'invention a pour objet dispositif et un procédé pour la mesure de rayons gamma et tels que définis dans les revendications 1 et 14, respectivement. Dans le présente demande on entendra par "rayons gamma reçus" des rayons gamma provenant des formations, comme il sera expliqué plus clairement dessous, ainsi que des rayons gamma founis par une première source auxiliaire éventuelle.

On connaît plusieurs techniques de diagraphie nucléaire dans lesquelles on détecte les rayons gamma provenant des formations géoligigues traversées par un sondage. Ces rayons gamma peuvent être dûs à la radioactivité naturelle de ces formations ou résulter de l'irradiation de ces formations par une source de neutrons ou de rayons gamma. La détection de ces rayons gamma, qu'ils proviennent d'une radioactivité naturelle ou provoquée, peut s'effectuer séparément pour plusieurs plages d'énergie ou fenêtres distinctes afin d'obtenir des informations sur le spectre d'énergie de ces rayons gamma. Le spectre obtenu fournit ensuite des indications sur la lithologie des formations. A titre d'exemple, un dispositif d'analyse spectrale des rayons gamma naturels est décrit dans le brevet des Etats-Unis d'Amérique US—A—3 976 878 (P. Chevalier et B. Seeman).

Dans ce dispositif, le système de détection comprend un cristal à scintillation, un photomultiplicateur, un amplificateur linéaire et un analyseur de hauteur d'impulsions. A la sortie de l'amplificateur apparaissent des impulsions électriques dont l'amplitude est proportionelle à l'énergie des rayons gamma reçus par le cristal. Dans l'analyseur de hauteur d'impulsions le spectre d'énergie des rayons gamma est divisé en cinq fenêtres au moyen de comparateurs ayant des seuils prédéterminés $A_1$ à $A_6$. Les taux de comptage des différentes fenêtres permettent de calculer les teneurs en thorium, uranium at potassium (T, U, K) des formations. Dans cette technique, comme dans toutes celles qui utilisent une étude spectrale, c'est-à-dire une discrimination par hauteur d'énergie du rayonnement reçu, il est d'une extrême importance pour la précision de la mesure d'équiper le système de détection de moyens de stabilisation de gain. En effet les systèmes de détection de rayons gamma et notamment les photomultiplicateurs présentent des variations importantes de gain dues surtout aux changements de température ou aux taux de comptage. Un procédé de stabilisation fréquemment utilisé et décrit dans le brevet ci-dessus consiste à adjoindre à l'appareil une source auxiliaire de rayons gamma dont l'énergie est inférieure à la plage du spectre détecté. Dans l'exemple décrit on a choisi une source d'américium dont le pic d'émission se situe à 60 KeV. On mesure deux taux de comptage $M_1$ et $N_1$ dans deux demi-fenêtres de largeur déterminée, disposées de part et d'autre de l'énergie 60 KeV et l'on utilise un signal d'erreur fonction de la différence $(M_1—N_1)$ pour commander par une boucle de contre-réaction la haute tension du photomultiplicateur.

Cette technique de stabilisation permet de réduire efficacement les erreurs de mesure, jusqu'à 5% dans des appareils utilisés actuellement. Toutefois, il est souhaitable d'améliorer encore cette précision.

Lorsqu'on utilise pour la stabilisation une source auxiliaire qui émet des rayons gamma monoénergétiques en dessous de la plage d'énergie intéressant la mesure, on détecte de décalage du spectre dans une plage d'énergie où ce décalage est faible. En effet, pour une certaine variation de gain, le décalage du spectre est d'autant plus grand que l'énergie où se produit ce décalage est élevée. La détection du décalage est dont peu précise et des erreurs apparaissent, dues aux variations statistiques des taux de comptage. De plus, lorsqu'on utilise des cristaux scintillateurs de grande dimension, les rayons gamma à faible énergie de la source auxiliaire n'atteignent qu'une faible partie du cristal et la stabilisation qui en découle est sérieusement affectée par un hétérogénéité du cristal ou des effets de vieillissement.

Un solution intéressante est d'avoir recours, comme dans le brevet américain US—A— 3 829 686 (W. E. Schultz et autres) à un pic naturel du spectre détecté dont on connaît par avance le niceau d'énergie exact. Cette solution se heurte à une difficulté majeure dans le cas de l'étude des formations géologiques. Le taux de comptage d'un pic déterminé est lié à la teneur, dans la formation géologique examinée, d'un élément particulier. Dans le cas de la spectroscopie des rayons gamma naturels per exemple, le pic centré sur l'énergie 1,46 MeV est presque entièrement dû à la présence de potassium dans la formation. Autrement dit, si la teneur d'un élément devient très faible, le pic correspondant disparaît et toute stabilisation basée sur ce dernier devient trop entachée d'erreurs pour être valable.

Dan le brevet des Etats-Unis d'Amérique US—A—3 101 409 (L. E. Fite) on a également proposé une stabilisation utilisant deux pics provenant de deux sources auxiliaires de rayons gamma. L'un des pics est utilisé pour commander la haute tension du photomultiplicateur tandis que l'autre pic est utilisé pour commander le seuil inférieur du discriminateur de hauteur d'impulsions. Les deux boucles de stabilisation sont indépendantes et ne permettant pas de résoudre le cas où l'un des pics disparaîtrait. Dans le brevet ce problème n'est même pas posé car les pics proviennent de deux sources auxiliaires de rayons gamma monoénergétiques spécialement ajoutées à l'appareil pour la stabilisation.

L'invention propose une technique de détection de rayons gamma incluant une stabilisation basée sur la détection de plusieurs pics à différents niveaux d'énergie, un au moins des pics appartenant au spectre de rayons gamma provenant des formations.

L'invention propose en outre une technique de diagraphie de rayons gamma ayant une détection particulièrement bien stabilisée grâce à l'utilisation optimale des rayons gamma provenant des formations.

Le dispositif pour la mesure de rayons gamma reçus dans une installation de sondage de formations géologiques, selon l'invention, est caractérisé comme décrit dans la revendication 1.

Selon une variante du dispositif selon l'invention l'autre valeur prédéterminée correspond à l'un des pics situés dans le spectre de rayons gamma provenant des formations. Pour élaborer le premier signal d'erreur, le dispositif comprend des moyens vkc fournir les taux de comptage des impulsions comprises dans chacune desdites fenêtres et des moyens pour combiner les taux de comptage afin de fournir ledit premier signal d'erreur.

Les moyens pour combiner les taux de comptage sont adaptés à calculer les sommes et les différences entre les taux de comptage des fenêtres contigües et à combinder ces sommes et ces différences pour minimiser les effets des variations statistiques des taux de comptage. Cette combinaison est par exemple le rapport entre une première fonction linéaire des différences et une deuxième fonction linéaire des sommes. Dans ces fonctions linéaires, les sommes et les différences des taux de comptage sont pondérés par des facteurs prédéterminés d'après l'énergie centrale du pic correspondant, la largeur des fenêtres correspondant à ce pic et la résolution des moyens de détection utilisés.

Selon une autre variante, le dispositif comprend en outre une deuxième boucle de stabilisation basée sur le pic d'émission d'une source auxiliaire de rayons gamma, ce pic étant situé en dehors de la plage étudiée de rayons gamma provenant des formations géologiques.

Le procédé selon l'invention pour la mesure de rayons gamma reçus dans une installation de sondage de formations géologiques, est caractérisé comme décrit dans la revendication 14.

Les caractéristiques et avantages de l'invention ressortiront mieux de la description qui suit, donnée à titre d'exemple non limitatif, en référence aux dessins annexés dans lesquels:

— la figure 1 est un schéma d'un dispositif de mesure de rayons gamma selon l'invention représenté dans un sondage;
— la figure 2 est un schéma d'un premier mode de réalisation d'une partie du dispositif de la figure 1;
— la figure 3 est une représentation d'un spectre de rayons gamma reçus provenant des formations; et
— la figure 4 est un organigramme de la suite des opérations effectuées par un calculateur dans un autre mode de réalisation qui est une variante de celui de la figure 2.

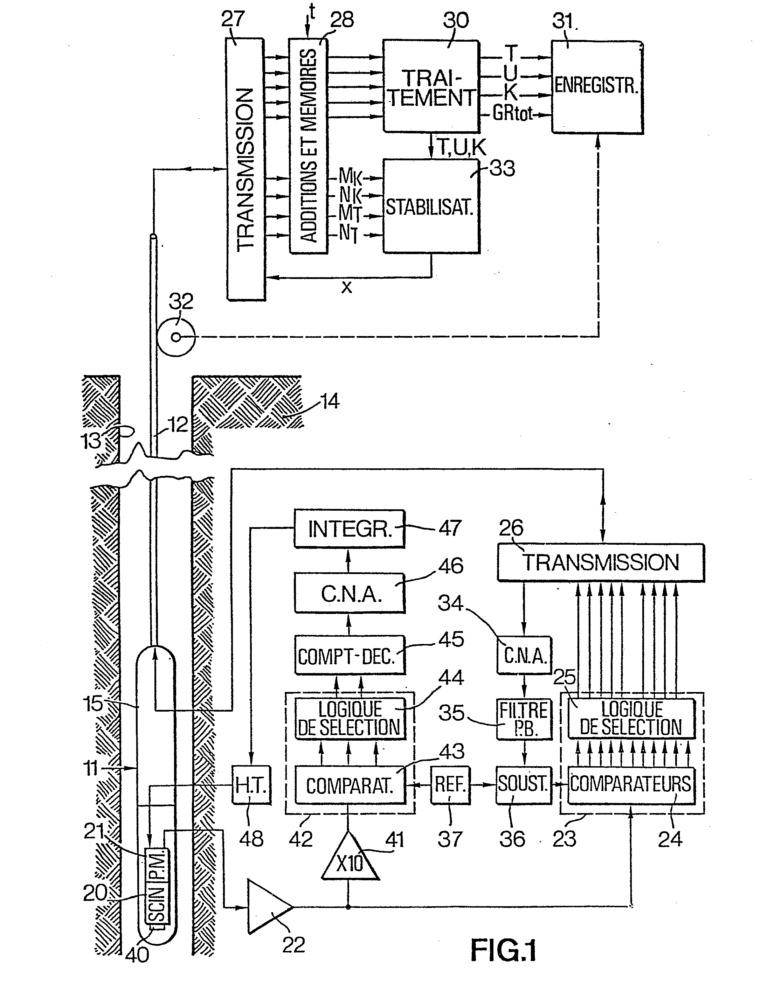

En référence à la figure 1, une sonde de diagraphie 11 est suspendue à l'extrémité d'un câble 12 dans un sondage 13 qui traverse des formations 14. La sonde 11 qui comporte à sa partie supérieure une enveloppe étanche 15 contenant des circuits électroniques fait partie d'un dispositif de diagraphie utilisé pour la spectroscopie des rayons gamma naturels provenant des formations 14. Ce dispositif détermine les teneurs T, U, K en thorium, uranium et potassium des formations par une analyse spectrale de la radioactivité naturelle des formations selon les principes décrits dans le brevet des Etats-Unis d'Amérique US—A—3 967 878 déjà mentionné. Toutefois ce dispositif est équipé d'un nouveau système de stabilisation.

Comme on l'a vu précédemment, la stabilisation d'un tel dispositif est très importante car elle conditionne la précision des mesures. Selon l'invention, on détecte des décalages du spectre à plusieurs niveaux d'énergie correspondant à des pics du spectre reçu, on calcule un signal d'erreur fonction de ces décalages et l'on stabilise le réponse du dispositif de mesure par une boucle de contre-réaction qui tend à annuler ce signal d'erreur. Au moins l'un des pics est choisi dans le spectre de rayons gamma provenant des formations et peut donc diminuer ou même disparaître pendant la mesure. Le signal d'erreur est une fonction des décalages qui utilise au mieux, pour la stabilisation, le spectre de rayons gamma provenant des formations.

On sait que le décalage d'un pic $i$ du spectre peut être détecté au moyen paramètre appelé facteur de forme $F_i$ donné par l'équation:

$$F_i = \frac{M_i - N_i}{M_i + N_i} \qquad (1)$$

dans laquelle $M_i$ et $N_i$ sont les taux de comptage des rayons gamma dans deux fenêtres de largeur $W_i$ de part et d'autre d'une valeur prédéterminée $E_i$ où devrait se trouver l'énergie moyenne du pic. En supposant que la forme du pic étudié est gaussienne, on trouve que le décalage détecté $\Delta E_i$ du pic peut être exprimé en fonction du facteur de forme par l'équation:

$$\Delta E_i = H_i F_i \qquad (2)$$

dans laquelle $H_i$ est, pour un pic, une constante fonction de l'énergie du pic $E_i$, de la largeur $W_i$ des fenêtres de détection et de la résolution $r_i$ du détecteur à ce niveau d'énergie. Le coefficient $H_i$ peut être prédéterminé pour un pic $E_i$, pbur des fenêtres de largeur $W_i$ et pour un détecteur ayant une résolution $r_i$ au niveau $E_i$, par l'équation:

$$H_i = \frac{\displaystyle\int_{E_i - W_i}^{E_i + W_i} \exp\left[-2,77\frac{(E - E_1)^2}{r_i^2 E_i^2}\right]dE}{2E_i\left[-1 + \exp\left(-2,77\frac{W_i^2}{r_i^2 E_i^2}\right)\right]} \qquad (3)$$

Selon l'invention on élabore un signal d'erreur X qui est une fonction linéaire des facteurs de forme de plusieurs pics.

$$X = \Sigma A_i \Delta E_i \qquad (4)$$

Les coefficients de pondération $A_i$ sont choisis de façon à minimiser l'effet des erreurs statistiques. En effet, ces erreurs statistiques pourraient introduire des incohérences dans la stabilisation notamment lorsque l'amplitude d'un des pics détectés devient très faible, auquel cas le facteur de forme correspondant $F_i$, voision de o/o n'a plus de sens. Pour satisfaire à cette condition, les coefficients sont déterminés de façon à minimiser la variance $\sigma_x^2$ de X.

Les équations (2) et (4) donnent:

$$X = \Sigma_i A_i H_i F_i \qquad (5)$$

Si la variance de $F_i$ est $\sigma_{Fi}^2$, la variance de X est d'après le théorème de l'addition des variances:

$$\sigma_x^2 = \Sigma_i A_i^2 H_i^2 \sigma_{Fi}^2 \qquad (6)$$

Le calcul montre que $\sigma_x^2$ est minimal pour:

$$A_i = \frac{1}{H_i^2 \sigma_{Fi}^2} \Big/ \Sigma_i \frac{1}{H_i^2 \sigma_{Fi}^2} \qquad (7)$$

Comme valeur de $\sigma_{Fi}^2$ on peut prendre:

$$\sigma_{Fi}^2 = 1 \Big/ (M_i + N_i) \qquad (8)$$

Donc:

$$A_i H_i = \frac{M_i + N_i}{H_i} \Big/ \Sigma_i \frac{M_i + N_i}{H_i^2} \qquad (9)$$

En combinant les équations (1), (5) et (9) on trouve:

$$X = \frac{\Sigma_i \dfrac{(M_i - N_i)}{H_i}}{\Sigma_i \dfrac{(M_i + N_i)}{H_i^2}} \qquad (10)$$

On peut aussi calculer la variance $\sigma_x^2$ en remplaçant dans l'équation (6) les valeurs de $A_i$ et $\sigma_{Fi}^2$ des équations (7) et (8) pour obtenir:

$$\sigma_x^2 = 1 \Big/ \Sigma_i \frac{M_i + N_i}{H_i^2} \qquad (11)$$

D'après cette dernière équation, on voit que si l'un des pics est absent, la quantité $(M_i + N_i)$ correspondant à ce pic est nulle. En d'autres termes, la contribution de ce pic au signal d'erreur est nulle et la stabilisation est assurée en totalité grâce aux décalages détectés sur les autres pics. Par contre, dès que le pic précédemment absent prend une amplitude notable, la variance $\sigma_x^2$ diminue et ce pic participe efficacement à la stabilisation.

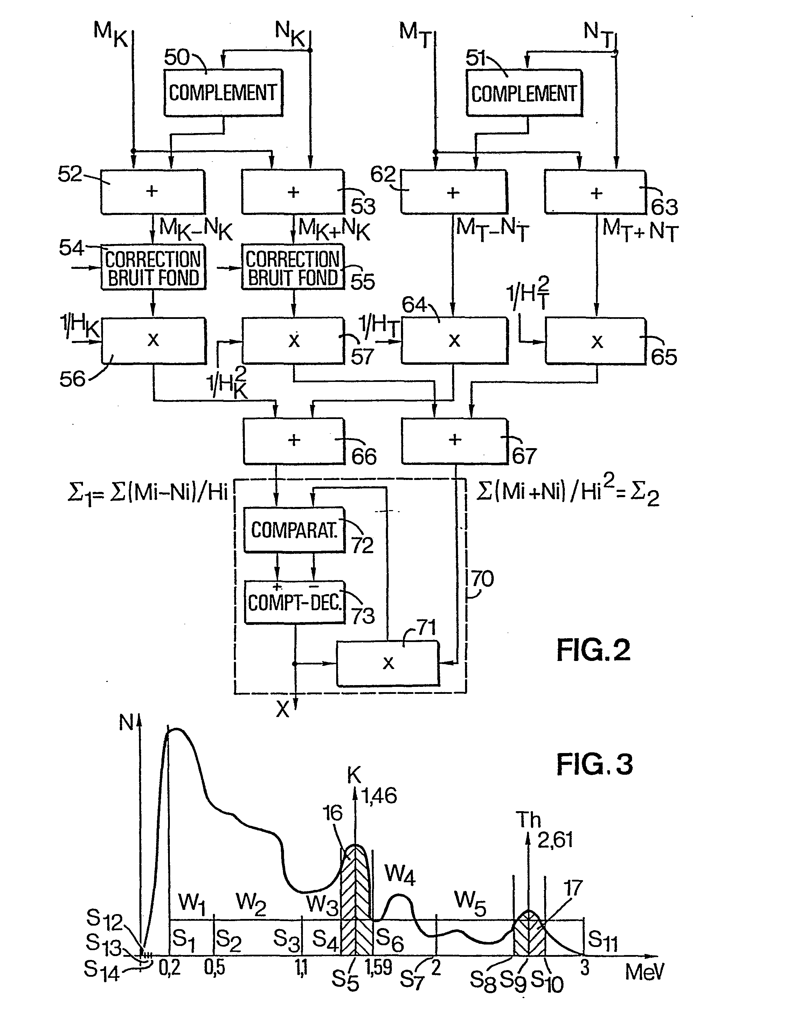

Dans le mode de réalisation de la figure 1 pour l'étude spectrale de la radioactivité des formations, la stabilisation est réalisée au moyen de deux boucles de contre-réaction dont l'une utilise deux pics du spectre de rayons gamma provenant des formations pour produire un signal d'erreur. La figure 3 représente un exemple de spectre de rayons gamma naturels provenant des formations. Dans ce spectre on remarque plusieurs pics et notamment un pic 16 à 1,46 MeV principalement dû à la présence de potassium dans les formations et un pic 17 à 2,61 MeV principalement dû à la présence de thorium. Dans le mode de réalisation décrit, ces deux pics sont utilisés pour une boucle de stabilisation.

En référence de nouveau à la figure 1, la sonde 11 contient de façon classique un cristal à scintillation 20, par exemple au iodure de sodium, suivi par un photomultiplicateur 21 pour convertir les rayons gamma reçus en impulsions électriques dont l'amplitude est proportionnelle à l'énergie des rayons gamma. Ces impulsions sont amplifiées par un amplificateur linéaire 22 puis appliquées à un discriminateur de hauteurs d'impulsions 23. Le discriminateur 23 comprend onze comparateurs 24 dont les seuils de référence sont choisis comme représentés en $S_1$ à $S_{11}$ sur la figure 3. Dans l'exemple choisi les seuils $S_1$ à $S_{11}$ sont pris respectivement égaux à 200, 500, 1100, 1365, 1460, 1590, 2000, 2520, 2615, 2745 et 3000 KeV. Chaque comparateur ne fournit une impulsion de sortie que pour une impulsion d'entrée dont l'amplitude est supérieure au seuil de ce comparateur.

Les onze sorties des comparateurs sont reliées à des circuits logiques de sélection 25 ou circuits d'anticoïncidence qui tirent les impulsions comprises dans neuf fenêtres différentes. Cinq fenêtres $W_1$ à $W_5$ (voir figure 3) servent aux mesures proprement dites comme indiqué dans le brevet des Etats-Unis d'Amérique US—A—3 976 878 déjà cité. Ces fenêtres de mesure sont celles comprises entre les seuils $(S_1—S_2)$, $(S_2—S_3)$, $(S_3—S_6)$, $(S_6—S_7)$ et $(S_7—S_{11})$. Quatre fenêtres servent à la stabilisation. Ce sont deux premières fenêtres $(S_4—S_5)$ et $(S_5—S_6)$ de part et d'autre de la valeur 1460 KeV et deux deuxièmes fenêtres $(S_8—S_9)$ et $(S_9—S_{10})$ de part et d'autre de la valeur 2615 KeV. Pour chaque fenêtre un circuit logique d'anticoïncidence sélectionne les impulsions dont l'amplitude est comprise entre deux seuils.

Les impulsions ainsi triées par amplitudes en neuf fenêtres sont appliquées à un circuit de transmission 26 pour être envoyées en surface par l'intermédiaire du câble. Ces circuits 26 peuvent être du type décrit dans le brevet français FR—A—2 374 694 (inventeurs A. Belaigues et autres) pour transmettre des mots de données ou de commande entre le fond et la surface. Les impulsions des neuf fenêtres peuvent être transmises par exemple sous forme de neuf mots binaires représentant chacun le nombre d'impulsions d'une fenêtre pendant une durée de 16 millisecondes (1/60 sec.). Les circuit 22 à 26 sont placés dans l'enveloppe étanche 15.

Les informations arrivant en surface sont reçues par d'autres circuits de transmission 27 qui appliquent les neuf taux de comptage à un circuit d'addition et de mémoire 28 qui effectue et met en mémoire la somme des impulsions dans chaque fenêtre pendant un temps $t$ réglable de 1 à 4 secondes.

Les taux de comptage dans les cinq fenêtres de mesures sont appliqués à un circuit de traitement 30 qui combine ces taux de comptage pour élaborer des signaux représentatifs des teneurs T, U, K en thorium, uranium et potassium des formations, comme expliqué dans le brevet des Etats-Unis d'Amérique US—A—3 976 878 déjà mentionné. Le circuit de traitement 30 fournit aussi la radioactivité naturelle totale GRtot par une addition des taux de comptage des cinq fenêtres. Ces résultats sont enregistrés au moyen d'un enregistreur magnétique et aussi sous forme graphique sur un film. L'enregistrement est effectué en fonction de la profondeur détectée par une roue 32 en contact sur le câble 12.

Les taux de comptage dans les quatre fenêtres de stabilisation sont appliqués à un calculateur de stabilisation 33 qui élabore un signal d'erreur X selon l'équation (10). Ce signal d'erreur X est appliqué aux circuits de transmission de surface 27 qui le transmet par les conducteurs du câble aux circuits de transmission de fond 26. Après démodulation, ce signal X est appliqué à un convertisseur numérique-analogique 34 puis à un filtre 35 qui peut être par exemple un filtre RC avec une constante de temps de l'ordre de 100 seconds de façon à rendre négligeables les variations statistiques. La sortie du filtre 35 est reliée à un circuit de soustraction 36 qui reçoit par ailleurs une tension provenant d'une alimentation de référence 37 pour faire varier cette tension en réponse au signal d'erreur. La tension ainsi commandée détermine par l'intermédiaire d'un diviseur de tension les valeurs de seuils des comparateurs 24. Le circuit 36 est adapté à diminuer proportionellement les valeurs de seuils lorsque le signal d'erreur X indique un décalage du spectre vers les basses énergies.

Selon une variante du dispositif conforme à l'invention, celui-ci peut comprendre en outre une deuxième boucle de stabilisation, à action rapide, qui utilise une deuxième source auxiliaire 40 de rayons gamma. Cette source 40 disposée dans la sonde 11 est en américium 241 avec un pic d'émission centré sur la valeur 60 KeV, c'est-à-dire en dessous du spectre détecté des rayons gamma provenant des formations. Les rayons gamma provenent de la deuxième source auxiliaire 40 donnet à la sortie de l'amplificateur 22 des impulsions électriques appliquées à une amplificateur 41 de gain dix. La sortie de l'amplificateur 41 est appliquée à un analyseur de hauteurs d'impulsions 42 formé de trois comparateurs 43 et de circuits logiques de sélection 44. Les comparateurs 43 dont les valeurs de seuils proviennent d'un diviseur de tension alimenté par la tension de référence 37 séparent sur trois sorties les impulsions dont les amplitudes sont respectivement supérieures à trois seuils $S_{12}$, $S_{13}$ et $S_{14}$ correspondant à des énergies de rayons gamma de 40, 60 et 80 KeV, c'est-à-dire en dessous du spectre détecté provenant des formations (voir figure 3).

Les circuits logiques de sélection 44 ont pour fonction de trier sur deux sorties d'une part les impulsions dont l'amplitude est comprise entre les deux seuils $S_{12}$ et $S_{13}$ et d'autre part celles dont l'amplitude est comprise entre les deux seuils $S_{13}$ et $S_{14}$. On sépare ainsi les impulsions d'un pic d'américium en deux fenêtres situées de part de d'autre de l'énergie centrale 60 KeV. Les deux sorties de la logique 44 sont respectivement reliées aux entrées positive et négative d'un compteur-décompteur 45 dont le contenu est ainsi représentatif de la différence $M_{Am}-N_{Am}$ des taux de comptage des impulsions comprises dans les deux fenêtres de l'américium. Le contenu du compteur-décompteur 45 est appliqué à un convertisseur numérique-analogique 46 puis à un circuit d'intégration 47 qui fournit un signal d'erreur pour commander la haute tension 48 du photomultiplicateur. Le signal d'erreur est appliqué de façon à augmenter le gain du photomultiplicateur lorsque le pic de l'américium se décale vers les basses énergies, c'est-à-dire lorsque le taux de comptage $M_{Am}$ de la fenêtre inférieure devient plus élevé que celui $N_{Am}$ de la fenêtre supérieure. Le circuit 47 intègre le signal d'erreur avec une constante de temps de quelques secondes. Les circuits 34 à 48 sont disposés dans l'enveloppes étanche 15.

La deuxième boucle de stabilisation basée sur le pic d'américium et agissant sur le gain du photomultiplicateur a l'effet correctif le plus important et le plus rapide (quelques secondes). Cette boucle pourrait aussie être conçue de façon à agir sur le gain de l'amplificateur 22 ou sur la tension de référence 37. La première boucle de stabilisation, basée sur les pics de potassium et de thorium, est d'action plus lente (100 secondes par exemple) et affine l'effet de la deuxième. On obtient ainsi une erreur sur la mesure inférieure au pourcent.

La figure 2 représente plus en détail un premier mode de réalisation, sous forme de circuits, du calculateur de stabilisation 33. Ce calculateur reçoit les taux de comptage pendant le temps $t$ $M_K$, $N_K$, $M_T$ et $N_T$ des impulsions dans les deux fenêtres du potassium et les deux fenêtres du thorium. Les taux de comptage $N_K$ et $N_T$ sont appliqués à deux circuits de complément 50 et 51 qui calculent respectivement les nombres $-N_K$ et $-N_T$. La sortie du circuit 50 est appliquée à un circuit d'addition 52 qui reçoit aussi le taux de comptage $M_K$ pour fournir des signaux représentatifs de la différence $(M_K-N_K)$. Un autre circuit d'addition 53 reçoit les signaux $M_K$ et $N_K$ pour calculer la somme $(M_K+N_K)$. Des corrections de bruit de fond sont ensuite effectuées sur la différence $(M_K - N_K)$ et la somme $(M_K + N_K)$ au moyen de deux circuits 54 et 55.

Ces corrections améliorent la précision obtenue par la stabilisation. En effet, le pic du potassium a un bruit de fond provenant à la fois du thorium et de l'uranium. De plus, le taux de comptage de la fenêtre inférieure du potassium est trop élevé du fait du bruit de fond par effet Compton provenant du potassium lui-même. Dans le circuit 54 on calcule la différence $B_d$ des bruits de fond entre les deux fenêtres du potassium par l'équation:

$$B_d = (B_{MK} - B_{NK}) = a_1 T + a_2 U + a_3 K \qquad (12)$$

Les coefficients $a_1$, $a_2$ et $a_3$ sont déterminés dans un puits d'étalonnage en plaçant successivement le dispositif en face de plusieurs formations artificielles dont on connaît les teneurs T, U, K. La différence de bruit de fond est ensuite retranchée de la différence des taux de comptage.

De même dans le circuit 55 on calcule la somme $B_s$ des bruits de fond dans les deux fenêtres par l'équation:

$$B_s = b_1 T + b_2 U + b_3 K \qquad (13)$$

dans laquelle les coefficients $b_1$, $b_2$ et $b_3$ sont déterminés comme précédemment dans un puits d'étallonage, et l'on retranche cette somme $B_s$ de la somme des taux de comptage $(M_K + N_K)$.

La différence corrigée $(M_K - N_K)_c$ est appliquée à un circuit de multiplication 56 pour être multipliée par le coefficient prédéterminé $1/H_K$. Comme on l'a vu précédemment, ce coefficient de pondération dépend des largeurs de fenêtre, de l'énergie centrale du pic et de la résolution du détecteur utilisé (équation 3). Dans l'exemple décrit, ce coefficient $1/H_K$ est de 24,58 pour un détecteur dont la résolution pour le césium était de 10%. La somme corrigée $(M_K + N_K)_c$ est appliquée à un circuit de multiplication 57 pour être multipliée par un coefficient égal à $1/H_K^2$.

De façon symétrique, le taux de comptage $M_T$ et le complément du taux de comptage $N_T$ sont appliqués à un circuit d'addition 62 qui calcule la différence $M_T - N_T$. Les deux taux de comptage $M_T$ et $N_T$ sont ajoutés dans un circuit d'addition 63. Le pic de thorium a un bruit de font dû principalement à l'uranium et l'on peut envisager des corrections de bruit de fond sur la somme et la différence des taux de comptage, de la même façon que pour le pic de potassium. Comme ce bruit de fond est beaucoup plus faible que celui du potassium on a choisi, dans le mode de réalisation décrit, d'appliquer directement les pondérations par les facteurs $1/H_T$ et $1/H_T^2$ au moyen de circuits de multiplication 64 et 65. Dans l'exemple, avec les largeurs de fenêtre choisies, le facteur $1/H_T$ a été pris égal à 31,51 pour le même détecteur. Les circuits 56 et 64 sont reliés à un circuit d'addition 66 qui calcule la somme pondérée $\Sigma_1$ des différentes corrigées des taux de comptage:

$$\Sigma_1 = \Sigma(M_i - N_i)/H_i = (M_K - N_K)_c/H_K + (M_T - N_T)_c/H_T \qquad (14)$$

Les circuits 57 et 65 sont reliés à un circuit d'addition 67 qui calcule la somme pondérée $\Sigma_2$ des sommes corrigées des taux de comptage:

$$\Sigma_2 = \Sigma(M_i + N_i)/H_i^2 = (M_K + N_K)_c/H_K^2 + (M_T + N_T)_c/H_T^2 \qquad (15)$$

Les signaux de sortie des circuits 66 et 67 sont appliqués à une circuit de division 70 qui calcule le rapport $\Sigma_1/\Sigma_2$, c'est-à-dire le signal d'erreur X selon l'équation (10). Le circuit de division 70 comprend principalement un multiplicateur 71, un comparateur 72 et un compteur-décompteur 73. Le nombre $\Sigma_1$ de l'équation (14) et la sortie du multiplicateur 71 sont appliqués à l'entrée du comparateur 72 dont les sorties sont appliquées au compteur-décompteur 73. De cette façon la sortie A du multiplicateur est égale à $A = X \cdot \Sigma_2$ et le comparateur 72 a pour effect d'égaler A et $\Sigma_1$. Par conséquent la sortie du compteur-décompteur 73 est bien égale au rapport:

$$X = \Sigma_1/\Sigma_2$$

Les circuits de multiplication utilisés peuvent être du type MPY-12HJ commercialisé par la société T. R. W. Californie, Etats-Unis d'Amérique.

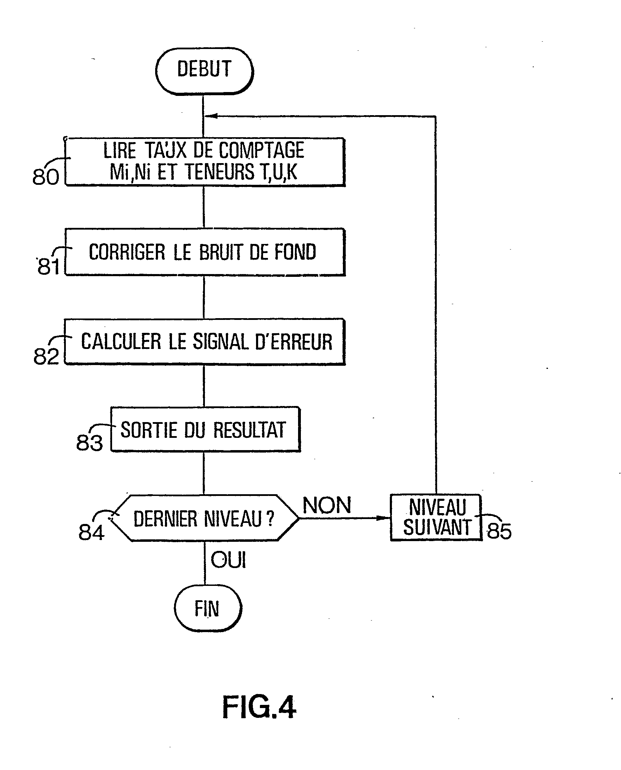

Dans un autre mode de realisation ce calculateur 33 peut être un ordinateur universel programmé de façon convenable pour fournir le signal X. Un organigramme général des opérations à effecteur est représenté sur la figure 4. Tout d'abord on lit des taux de comptage $M_K$, $N_K$, $M_T$, $N_T$ et les teneurs T, U, K calculées (bloc 80). On corrige ensuite les taux de comptage pour le bruit de fond en soustrayant par exemple à chaque taux de comptage un nombre de comptes calculé par une fonction linéaire des teneurs T, U, K (bloc 81). On calcule ensuite le signal d'erreur X (block 82) par l'équation (10) et l'on extrait cette valeur calculée du signal d'erreur pour l'appliquer aux circuits de transmission 27. Ce calcul est effectué en temps réel pour chaque niveau de profondeur auquel se trouve la sonde 11 comme représenté par les blocs 84 et 85. Ce mode de réalisation est équivalent à celui de la figure 2.

De la même façon les taux de comptage $M_{Am}$ et $N_{Am}$ du pic d'américium pourraient être transmis en surface et le signal d'erreur pour la stabilisation correspondante pourrait être calculé en surface par un ordinateur programmé puis retransmis au fond pour commander la gain du dispositif de mesure.

On remarquera que pour chaque pic, potassium ou thorium, les fenêtres de détection contiguës sont de largeur inégale. Dans l'exemple ces largeurs sont de 95 KeV pour la fenêtre inférieure et 130 KeV pour la fenêtre supérieure. On choisit la fenêtre supérieure plus large afin de tenir compte de la diminution de résolution du détecteur lorsque l'énergie augmente.

De nombreuses variantes non revendiquées peuvent être apportées aux modes de réalisation décrits sans sortir du cadre de l'invention. En particulier le signal d'erreur peut être calculé à partie d'un nombre de pics de référence supérieur à deux, en utilisant la formule (10). An lieu de deux boucles de stabilisation, on peut combiner les taux de comptage des rayons gamma provenant de la première source auxiliaire mono-énergétique et les taux de comptage de plusieurs pics du spectre détecté provenant des formations. Le filtrage réalisé par le circuit 35 pourrait être effectué par une étape de programme ajoutée à l'organigramme de la figure 4.

**Revendications**

1. Dispositif pour le mesure de rayons gamma reçus dans un installation de sondage de formations géologiques, lesdits rayons gamma reçus étant constitués d'une part de rayons gamma, dénommés ci-après rayons gamma provenant des formations et qui sont dus exclusivement à la radioactivité naturelle desdites formations géologiques ou qui résultent de l'irradiation de ces formations par une source de neutrons ou de rayons gamma, d'autre part de rayons gamma fournis par une première source auxiliaire éventuelle de rayons gamma; ledit dispositif comprenant:

— des moyens (20, 21, 48) de détection pour convertir les rayons gamma reçus en impulsions électriques dont l'amplitude est liée à l'énergie de ces rayons gamma;
— des moyens de discrimination (23) pour trier ces impulsions électriques suivant leurs amplitudes afin de fournir des informations sur le spectre d'énergie des rayons gamma reçus, lesdits moyens de discrimination (23) comprenant notamment des moyens (24, 25) pour séparer les impulsions électriques dont les amplitudes sont comprises dans deux premières fenêtres contigües ($S_4$—$S_5$; $S_5$—$S_6$) situées de part et d'autre d'une première valeur prédéterminée ($S_5$) et dans deux deuxièmes fenêtres contigües ($S_8$—$S_9$; $S_9$—$S_{10}$) situées de part et d'autre d'une deuxième valeur prédéter-minée ($S_9$), ces première et deuxième valeurs prédéterminées correspondant aux énergies respectives de deux pics de référence (16, 17) détectés comprise dans le spectre des rayons gamma reçus, l'un des pics de référence étant situé dans le specture de rayons gamma provenant des formations, et l'autre pic de référence étant soit situé dans le spectre de rayons gamma provenant des formations, soit fourni par la source auxiliaire éventuelle, caractérisé en ce qu'il comprend en outre:
— des moyens (28, 30, 33) pvr combiner les impulsions desdites premières et deuxièmes fenêtres afin d'élaborer un premier signal d'erreur (X) représentatif des décalages des deux pics de référence détectés par rapport aux première et deuxième valeurs prédéterminées si ces deux pic sont présents dans le spectre reçu, et représentatif du décalage du pic détecté restant si l'un des pics disparaît; et

— des moyens (34, 35, 36) commandés par ledit premier signal d'erreur (X) pour modifier le réponse du dispositif de mesure afin d'effecteur une première stabilisation de ladite réponse.

2. Dispositif de mesure selon la revendication 1, caractérisé en ce que la deuxième valeur ($S_9$) prédéterminée correspond a une second pic de référence situe dans le spectre de rayons gamma provenant des formations.

3. Dispositif de mesure selon la revendication 2, caractérisé en ce que les moyens (28, 30, 33) pour élaborer le premier signal d'erruer (X) comprennent des moyens pour fournir les taux de comptage des impulsions comprises dans chacune desdites premières et deuxièmes fenêtres et des moyens (30) pour combiner ces taux de comptage afind de fournir ledit premier signal d'erreur (X).

4. Dispositif de mesure selon la revendication 3, caractérisé en ce que les moyens (30) pour combiner lesdits taux de comptage ($M_i$, $N_i$) sont adaptés à calculer la différence entre les taux de comptage des deux premières fenêtres contigües ($S_4$—$S_5$; $S_5$—$S_6$) et la différence entre les taux de comptage des deux deuxièmes fenêtres contigües ($S_8$—$S_9$; $S_9$—$S_{10}$), et à combiner les deux différences ainsi obtenues de façon à minimiser les effets des variations statistiques desdits taux de comptage.

5. Dispositif de mesure selon la revendication 4, caractérisé en ce que les moyens (30) pour combiner lesdits taux de comptage sont adaptés à: calculer en outre les sommes des taux de comptage dns les premières et deuxièmes fenêtres contigües; calculer une première fonction linéaire desdites différences; calculer une deuxième fonction linéaire desdites sommes; et calculer le rapport ($F_i$) de la première à la deuxième fonction afin d'obtenir le premier signal d'erreur (X).

6. Dispositif de mesure selon la revendication 5, caractérisé en ce que lesdits moyens (30) pour combiner lesdits taux de comptage sont adaptés à calculer ladite première fonction en effectuant une somme pondérée desdites différences des taux de comptage et ladite deuxième fonction en effectuant une somme pondérée desdites sommes de taux de comptage.

7. Dispositif de mesure selon la revendication 6, caractérisé en ce que lesdits moyens (30) pour combiner lesdits taux de comptage sont adaptés à pondérer chacune desdites différences des taux de comptage par un facteur prédéterminé ($H_i$) d'après l'énergie centrale ($E_i$) du pic de référence correspondant, la largeur des fenêtres correspondant à ce pic de référence, et la résolution ($r_i$) des moyens de détection.

8. Dispositif de mesure selon la revendication 7, caractérisé en ce que lesdits moyens (30) pour combiner lesdits taux de comptage sont adaptés à pondérer chacune desdites sommes des taux de comptage par un deuxième facteur prédéterminé égal au carré du facteur de pondération appliqué à la différence correspondante desdits taux de comptage.

9. Dispositif de mesure selon l'une des revendications 3 à 8, caractérisé en ce que les moyen (33) pour élaborer le premier signal d'erreur (X) comprennent des moyens (34, 35) pour corriger lesdits taux de comptage pour tenir compte du bruit de fond.

10. Dispositif de mesure selon l'une des revendications 2 à 8, les deux pics étant situés dans le spectre des rayons gamma provenant des formations, caractérisé en ce qu'il comporte également une deuxième source auxiliaire (40) qui émet des rayons gamma monoénergétiques en dehors de la plage étudiée de rayons gamma provenant des formations géologiques, ainsi que des moyens (41—47) sensibles aux rayons gamma émis par cette deuxième source auxiliaire (40) pour modifier la réponse dudit dispositif. de mesure afin d'effectuer une deuxième stabilisation de ladite réponse.

11. Dispositif de mesure selon la revendication 10, caractérisé en ce qu'il comporte des circuits de discrimination (43—44) pour séparer les impulsions électriques dont les amplitudes sont comprises dans deux troisièmes fenêtres ($S_{12}$—$S_{13}$, $S_{13}$—$S_{14}$) contiguës situées de part et d'autre d'une troisième valeur déterminée correspondant au pic de rayons gamma (60 Kev) émis par la deuxième source auxiliaire (40); et en ce que lesdits moyens (41—47) pour effectuer la deuxième stabilisation comprennent des moyens pour combiner les impulsions desdites troisièmes fenêtres afin d'élaborer un deuxième signal d'erreur et des moyens (45—47) commandés par le deuxième signal d'erreur pour modifier la réponse du dispositif de mesure.

12. Dispositif de mesure selon la revendication 11, caractérisé en ce que lesdits moyens (45, 47) commandés par le deuxième signal d'erreur sont adaptés à modifier le gain desdits moyens de détection (20, 21, 48).

13. Dispositif de mesure selon la revendication 12, caractérisé en ce que les moyens commandés par le premier signal d'erreur (X) sont adaptés à modifier certains seuils de comparaison desdits moyens de discrimination (23) de façon que la modification desdits seuils n'ait pas d'influence sur ledit deuxième signal d'erreur.

14. Procédé pour la mesure de rayons gamma reçus dans une installation de sondage de formations géologiques, lesdits rayons gamma reçus étant constitués d'une part, de rayons gamm, dénommés ci-après rayons gamma provenant des formations et qui sont dus exclusivement à la radioactivité naturelle desditay formations géologiques ou qui résultent de l'irradiation de ces formations par une source de neutrons ou de rayons gamma, d'autre part, de rayons gamma fournis par une première source auxiliaire éventuelle de rayons gamma; ledit procédé comprenant les étapes suivantes:

— convertir les rayons gamma reçus en impulsions électriques dont l'amplitude est liée à l'énergie de ces rayons gamma;
— trier ces impulsions électriques suivant leurs amplitudes afin de fournir des informations sur le spectre d'énergie des rayons gamma reçus, et notamment séparer les impulsions électriques dont les amplitudes sont comprises dans deux premières fenêtres contiguës ($S_4$—$S_5$, $S_5$—$S_6$) situées de part et d'autre d'une première valeur prédéterminée ($S_5$) et dans deux deuxièmes fenêtres contiguës ($S_8$—$S_9$, $S_9$—$S_{10}$) situées de part et d'autre d'une deuxième valeur prédéterminée ($S_9$), ces première et deuxième valeurs prédéterminées correspondant aux énergies respectives de deux pics de référence détectés, compris dans le spectre des rayons gamma reçus; l'un des pics de référence étant situé dans le spectre détecté de rayons gamma provenant des formations et l'autre pic de référence étant soit situé dans le spectre de rayons gamma provenant de formations, soit fourni par la première source auxiliaire éventuelle, caractérisé en ce qu'il comprend en outre les étapes suivantes:
— combiner les impulsions desdites premières et deuxièmes fenêtres afin d'élaborer un premier signal d'erruer (X) représentatif des décalages des deux pics de référence détectés par rapport auxdites première et deuxième valeurs prédéterminées si ces deux pics sont présents dans le spectre reçu, et représentatif du décalage du pic restant si l'un des pics disparaît; et
— modifier (34, 35, 36) au moins l'une des précédentes étapes de mesure au moyen dudit premier signal d'erreur (X) afin de stabiliser ladite mesure.

15. Procédé de mesure selon la revendication 14, caractérisé en ce que l'autre pic de référence est situé dans le spectre de rayons gamma provenant des formations.

16. Procédé de mesure selon la revendication 15, caractérisé en ce que l'étape d'élaboration du premier signal d'erreur comprend les étapes suivantes:

— produire les taux de comptage des impulsions comprises dans chacune desdites fenêtres;
— calculer les sommes et les différences des taux de comptage respectivement dans les deux premières fenêtres contiguës et dans les deux deuxièmes fenêtres contiguës; et
— calculer le rapport entre une première fonction linéaires desdites différences et une deuxième fonction linéaire desdites sommes afin d'obtenir ledit premier signal d'erreur.

17. Procédé de mesure selon la revendication 16, caractérisé en ce que l'on calcule ladite première fonction linéaire en effectuant une somme pondérée desdites différences des taux de comptage et ladite deuxième fonction linéaire en effectuant une somme pondérée desdites sommes des taux de comptage.

18. Procédé de mesure selon la revendication 17, caractérisé en ce que les facteurs de pondération utilisés pour calculer la première fonction linéaire sont des facteurs prédéterminés dépendant de l'énergie centrale du pic de référence correspondant, de la largeur des fenêtres correspondant à ce pic de référence et de la résolution obtenue pour convertir les rayons gamma reçus en impulsions.

19. Procédé de mesure selon la revendication 18, caractérisé en ce que les facteurs de pondération utilisés pour calculer la deuxième fonction linéaire sont pris égaux aux carrés des facteurs de pondération utilisés pour calculer la première fonction linéaire.

20. Procédé de mesure selon l'une des revendications 16 à 19, caractérisé en ce qu'il comprend de plus une étape consistant à corriger les taux de comptage pour tenir compte du bruit de fond.

21. Procédé de mesure selon l'une des revendications 15 à 20, caractérisé en ce qu'il comprend de plus les étapes suivantes:

— émettre par une deuxième source auxiliaire de rayons gamma des rayons gamma monoénergétiques en dehors de la plage étudiée de rayons gamma provenant des formations; et
— modifier au moins l'une des étapes de mesure d'après les rayons gamma monoénergétiques détectés afin d'effectuer une deuxième stabilisation de ladite mesure.

22. Procédé de mesure selon la revendication 21, caractérisé en ce qu'il comprend les étapes suivantes:

— séparer les impulsions électriques dont les amplitudes sont comprises dans deux troisièmes fenêtres contigües situées de part et d'autre d'une troisième valeur déterminée correspondant au pic de rayons gamma émis par la deuxième source auxiliaire; et
— combiner les impulsions desdites troisièmes fenêtres afin d'élaborer un deuxième signal d'erreur pour effectuer ladite deuxième stabilisation.

23. Procédé de mesure selon la revendication 22, caractérisé en ce qu'il comprend l'étape consistant à modifier, par le deuxième signal d'erreur, ladite étape de conversion des rayons gamma en impulsions électriques.

24. Procédé de mesure selon la revendication 23, caractérisé en ce qu'il comprend l'étape consistant à modifier, par le premier signal d'erreur, certains seuils de comparaison de ladite étape de tri des impulsions électriques.

## Patentansprüche

1. Vorrichtung für die Messung von Gamma-strahlen, die in einer Bohrlochuntersuch-ungsanlage für geologische Formationen empfangen werden, welche empfangenen Gammastrahlen einerseits von Gammastrahlung gebildet werden, nachstehend als Gammastrahlung, die von den Formationen herrührend bezeichnet werden und die ausschließlich auf der natürlichen Radioaktivität der genannten geologischen Formationen beruht, oder die aus der Bestrahlung dieser Formation durch eine Neutronenquelle oder durch Gammastrahlungsquelle herrührt, sowie andererseits von Gammastrahlen, geliefert von einer ersten eventuellen Hilfsquelle für Gammastrahlen, welche Vorrichtung umfaßt:

— Detektionsmittel (20, 21, 48) zum Umsetzen der empfangenen Gammastrahlen in elektrische Impulse, deren Amplitude von der Energie dieser Gammastrahlen abhängt,
— Diskriminationsmittel (23) zum Klassieren dieser elektrischen Impulse entsprechend ihren Amplituden, um Informationen über das Energiespektrum der empfangenen Gamma-strahlen zu liefern, welche Diskriminations-mittel (23) insbesondere Trennmittel (24, 25) der elektrischen Impulse umfassen, deren Amplituden innerhalb von zwei ersten aneinander grenzenden Fenstern ($S_4$—$S_5$; $S_5$—$S_6$) liegen, beidseits eines ersten vorgegebenen Wertes ($S_5$) liegend, sowie in zwei zweiten aneinander grenzenden Fenstern ($S_8$—$S_9$; $S_9$—$S_{10}$), beid-seits eines zweiten vorgegebenen Wertes ($S_9$) liegend, wobei diese ersben und zweiten vorgegebenen Werte den jeweiligen Energien von zwei detektierten Referenzspitzen (16, 17) entsprechen, enthalten in dem Spektrum der empfangenen Gammastrahlen, wobei eine der Referenzspitzen in dem Spektrum der von den Formationen herrührenden Gammastrahlen liegt und die andere Referenzspitze entweder in dem Spektrum der von den Formationen herrührenden Gammastrahlen liegt oder von der eventuellen Hilfsquelle geliefert wird, dadurch gekennzeichnet, daß sie darüberhinaus umfaßt:
— Kombinationsmittel (28, 30, 33) zum Kombinieren der Impulse der genannten ersten und zweiten Fenster, um ein erstes Fehlersignals (X) zu gewinnen, das repräsentativ ist für die Versetzung der beiden detektierten Referenzspitzen relativ zu ersten und zweiten vorgegebenen Werten, falls diese beiden Spitzen in dem empfangenen Spektrum vorhanden sind, und repräsentativ ist für die Versetzung der verbleibenden detektierten Spitze, falls eine der Spitzen verschindet, und
— von dem genannten ersten Fehlersignal (X) gesteuerte Mittel (34, 35, 36) zum Modifizieren des Ansprechens der Meßvorrichtung, um eine erste Stabilisation des genannten Ansprechens zu bewirken.

2. Meßvorrichtung nach Anspruch 1, dadurch gekennzeichnet, daß der zweite vorgegebene Wert ($S_9$) eine zweiten Referenzspitze entspricht, die im Spektrum der von den Formationen herrührenden Gammastrahlen liegt.

3. Meßvorrichtung nach Anspruch 2, dadurch gekennzeichnet, daß die Mittel (28, 30, 33) zum Erzeugen des ersten Fehlersignals (X) Mittel umfassen zum Liefern der Zahlrate von Impulsen, die in jeweils einem der genannten ersten bzw. zweiten Fenster enthalten sind, und Mittel (30) zum Kombinieren dieser Zählraten, um das genannte erste Fehlersignal (X) zu liefern.

4. Meßvorrichtung nach Anspruch 3, dadurch gekennzeichnet, daß die Mittel (30) zum Kombinieren der genannten Zählraten ($M_i$, $N_i$) ausgebildet sind zum Berechnen der Differenz zwischen den Zählraten der beiden ersten aneinander grenzenden Fenster ($S_4$—$S_5$; $S_5$—$S_6$) und der Differenz zwischen der Zählraten der beiden zweiten aneinander grenzenden Fenster ($S_8$—$S_9$; $S_9$—$S_{10}$), und zum Kombinieren der beiden so erhaltenen Differenzen derart, daß die Effekte statistischer Veränderungen dieser genannten Zählraten minimiert werden.

5. Meßvorrichtung nach Anspruch 4, dadurch gekennzeichnet, daß die Mittel (30) zum Kombinieren der genannten Zählraten ausgebildet sind zum: zusätzlichen Berechnen der Summen der Zählraten in den ersten und zweiten aneinander grenzenden Fenstern, Berechnen einer ersten linearen Funktion der genannten Differenzen, Berechnen einer zweiten linearen Funktion der genannten Summen und Berechnen des Verhältnisses ($F_i$) der ersten zu der zweiten Funktion, um das erste Fehlersignal (X) zu erhalten.

6. Meßvorrichtung nach Anspruch 5, dadurch gekennzeichnet, daß die genannten Mittel (30) zum Kombinieren der genannten Zählraten ausgebildet sind zum Berechnen der genannten ersten Funktion durch Erzeugen einer gewichteten Summe der genannten Zählratendifferenzen und der genannten zweiten Funktion durch Erzeugen einer gewichteten Summe der genannten Summen der Zählraten.

7. Meßvorrichtung nach Anspruch 6, dadurch gekennzeichnet, daß die genannten Mittel (30) zum Kombinieren der genannten Zählraten ausgebildet sind zum Gewichten jeder der genannten Zählratendifferenzen mit einem vorgegebenen Faktor ($H_i$) je nach der zentralen Energie ($E_i$) der entsprechenden Referenzspitze, der Breite dieser Referenzspitze entsprechenden Fenster, und der Auflösung ($r_i$) der Detektionsmittel.

8. Meßvorrichtung nach Anspruch 7, dadurch gekennzeichnet, daß die genannten Mittel (30) zum Kombinieren der genannten Zählraten ausgebildet sind zum Gewichten jeder der genannten Zählratensummen mit einem zweiten vorgegebenen Faktor gleich dem Quadrat des Wichtungsfaktors, angewandt auf die entspechende Differenz der genannten Zählraten.

9. Meßvorrichtung nach einem der Ansprüche 3 bis 8, dadurch gekennzeichnet, daß die Mittel (33) zum Erzeugen des ersten Fehlersignals (X) Mittel (34, 35) umfassen zum Korrigieren der genannten Zählraten, um dem Hintergrundrauschen Rechnung zu tragen.

10. Meßvorrichtung nach einem der Ansprüche 2 bis 8, wobei die beiden Spitzen in dem Spektrum der von den Formationen herrührenden Gammastrahlen liegen, dadurch gekennzeichnet, daß sie außerdem eine zweite Hilfsquelle (40) umfaßt, die monoenergetische Gammastrahlen imitiert außerhalb des untersuchten Bereiches der von den geologischen Formationen herrührenden Gammastrahlen sowie Mittel (41—47) umfaßt, die empfindlich sind für Gammastrahlen, ausgesandt von dieser zweiten Hilfsquelle (40) zum Modifizieren des Ansprechens der genannten Meßvorrichtung zwecks Erzeugung einer zweiten Stabilisation des genannten Ansprechens.

11. Meßvorrichtung nach Anspruch 10, dadurch gekennzeichnet, daß sie Diskriminierschaltkreise (43—44) umfaßt zum Abtrennen der elektrischen Impulse, deren Amplituden in zwei dritten aneinander grenzenden Fenstern ($S_{12}$—$S_{13}$; $S_{13}$—$S_{14}$) liegen beidseits eines dritten vorgegebenen Wertes entsprechend der Spitze der Gammastrahlen (60 Kev), ausgesandt von der zweiten Hilfsquelle (40), und daß die genannten Mittel (41—47) zum Erzeugen der zweiten Stabilisation Mittel umfassen zum Kombinieren der Impulse der genannten dritten Fenster zwecks Erzeugung eines zweiten Fehlersignals sme Mittel (45—47), gesteuert von dem zweiten Fehlersignal, zum Modifizieren des Ansprechens der Meßvorrichtung.

12. Meßvorrichtung nach Anspruch 11, dadruch gekennzeichnet, daß die genannten von dem zweiten Fehlersignal gesteuerten Mittel (45—47) ausgebildet sind zum Modifizieren der Verstärkung der genannten Detektionsmittel (20, 21, 48).

13. Meßvorrichtung nach Anspruch 12, dadurch gekennzeichnet, daß die von dem ersten Fehlersignal (X) gesteuerten Mittel ausgebildet sind zum Modifizieren bestimmter Vergleichsschwellen der genannten Diskriminationsmittel (23) derart, daß die Modifikation der genannten Schwellen keinen Einfluß auf das genannte zweite Fehlersignal hat.

14. Verfahren zum Messen der in einer Bohrlochuntersuchungsanlage geologischer Formationen empfangenen Gammastrahlen, die einerseits gebildet werden von Gammastrahlen, welche nachstehend als von den Formationen herrührend bezeichnet werden und die ausschließlich auf der natürlichen Radioaktivität der genannten geologischen Formationen beruhen oder die herrühren von den Bestrahlung dieser Formationen mit einer Neutronenquelle oder Gammastrahlenquelle und andererseits von Gammastrahlen, geliefert von einer ersten eventuellen Hilfsquelle für Gammastrahlen, welches Verfahren die folgenden Schritte umfaßt:

— Umsetzen der empfangenen Gammastrahlen in elektrische Impulse, deren Amplitude in Beziehung mit der Energie dieser Gammastrahlen steht,

— Sortieren dieser elektrischen Impulse entsprechend ihren Amplituden, um Informationen zu liefern bezüglich des Energiespektrums der empfangenen Gammastrahlen und insbesondere zum Abtrennen der elektrischen Impulse, deren Amplituden in zwei ersten aneinander grenzenden Fenstern ($S_4$—$S_5$; $S_5$—$S_6$) beidseits eines ersten vorgegebenen Wertes ($S_5$) und in zwei zweiten aneinander grenzenden Fenstern ($S_8$—$S_9$; $S_9$—$S_{10}$) beidseits eines zweiten vorgegebenen Wertes ($S_9$) liegen, wobei diese ersten und zweiten vorgegebenen Werte jeweils der Energie von zwei detektierten Referenzspitzen entsprechen, enthalten in dem Spektrum der empfangenen Gammastrahlen, wobei eine der Referenzspitzen in dem detektierten Spektrum der Gammastrahlen, herrührend von den Formationen, liegt und die andere Referenzspitze entweder in dem Spektrum der Gammastrahlen, herrührend von den Formationen, liegt oder von der ersten eventuellen Hilfsquelle geliefert wird, dadurch gekennzeichnet, daß das Verfahren darüberhinaus folgende Schritte umfaßt:

— Kombinieren der Impulse der genannten ersten und zweiten Fenster zum Erzeugen eines ersten Fehlersignals (X), das repräsentiv ist für die Verlagerungen der beiden detektierten Referenzspitzen relativ zu den genannten ersten bzw. zweiten vorgegebenen Werten, falls diese beiden Spitzen in dem empfangenen Spektrum liegen, und repräsentativ ist für die Verlagerung der verbleibenden Spitze, falls eine de Spitzen verschwindet, und

— Modifizieren (34, 35, 36) mindestens einer der voranstehend genannten Meßschritte mittels des genannten ersten Fehlersignals (X) zum Stabilisieren der genannten Messung.

15. Verfahren nach Anspruch 14, dadurch gekennzeichnet, daß die andere Referenzspitze in dem Spektrum der Gammastrahlen liegt, die von den Formationen herrühren.

16. Verfahren nach Anspruch 15, dadurch gekennzeichnet, daß der Schritt der Erzeugung des ersten Fehlersignals die folgenden Schitte umfaßt:

— Erzeugen der Zählraten der Impulse, die in jedem der genannten Fenster auftreten,
— Berechnen der Summen und der Differenzen der Zählraten in deb beiden ersten aneinander grenzenden Fenstern bzw. in den zweiten aneinandergrenzenden Fenstern, und
— Berechnen des Verhältnisses zwischen einen ersten linearen Funktion der genannten Differenz und eine zweiten linearen Funktion der genannten Summen, um das genannte ersten Fehlersignal abzuleiten.

17. Verfahren nach Anspruch 16, dadurch gekennzeichnet, daß man die genannte erste lineare Funktion berechnet, indem man eine gewichtete Summe der genannten Zählratendifferenzen erzeugt und die genannte zweite lineare Funktion berechnet, indem man eine gewichtete Summe der genannten Zählratendifferenzen erzeugt und die genannte zweite lineare Funktion berechnet, indem man eine gewichtete Summe der genannten Zählratensummen erzeugt.

18. Verfahren nach Anspruch 17, dadurch gekennzeichnet, daß die für die Berechnung der ersten linearen Funktion verwendeten Wichtungsfaktoren vorgegebene Faktoren sind, abhängig von der zentralen Energie der entsprechenden Referenzspitze, der Breite der dieser Referenzspitze entsprechenden Fenster und der erzielten Auflösung zum Umsetzen der empfangenen Gammastrahlen in Impulse.

19. Verfahren nach Anspruch 18, dadurch gekennzeichnet, daß die verwendeten Wichtungsfaktoren für die Berechnung der zweiten linearen Funktion gleich dem Quadrat der für die Berechnung der ersten linearen Funktion verwendeten Wichtungsfaktoren sind.

20. Verfahren nach einem der Ansprüche 16 bis 19, dadurch gekennzeichnet, daß es darüberhinaus einen Schritt umfaßt, bestehend in der Korrektur der Zählraten zur Berücksichtigung des Hintergrundrauschens.

21. Verfahren nach einem der Ansprüche 15 bis 20, dadurch gekennzeichnet, daß es darüberhinaus die folgenden Schritte umfaßt:

— Aussenden mittels einer zweiten Gammastrahlenhilfsquelle, von monoenergetischen Gammastrahlen außerhalb des untersuchten Bereichs der von den Formationen herrührenden Gammastrahlen und
— Modifizieren mindestens eines der Meßschritte gemäß den detektieren monoenergetischen Gammastrahlen zweckes Erzeugung einer zweiten Stabilisation der genannten Messung.

22. Verfahren nach Anspruch 21, dadurch gekennzeichnet, daß es die folgenden Schritte umfaßt:

— Abtrennen der elektrischen Impulse, deren Amplituden in zwei aneinander grenzenden dritten Fenstern liegen beidseits eines dritten vorgegebenen Wertes entsprechend der Gammastrahlenspitze, ausgesandt von der zweiten Hilfsquelle, und
— Kombinieren der Impulse der genannten dritten Fenster zwecks Erzeugung eines zweiten Fehlersignals zum Bewirken der zweiten Stabilisation.

23. Verfahren nach Anspruch 22, dadurch gekennzeichnet, daß es den Schritt umfaßt, bestehend in der Modifikation, durch das zweite Fehlersignal, des genannten Schrittes der Umsetzung der Gammastrahlung in elektrische Impulse.

24. Verfahren nach Anspruch 23, dadurch gekennzeichnet, daß es den Schritt umfaßt, bestehend in der Modifikation, durch das erste Fehlersignal, bestimmter Vergleichsschwellen des genannten Sortierschrittes der elektrischen Impulse.

## Claims

1. An apparatus for measuring gamma rays received in a borehole unit, said borehole being drilled in geological formations, said received gamma rays being constituted, on the one hand, of gamma rays, hereinafter called gamma rays coming from the formations and which are due exclusively to natural radioactivity of said geological formations or resulting from irradiation of said formations by a neutron or gamma rays source, on the other hand, of gamma rays coming from an eventual first auxiliary gamma rays source, said apparatus comprising:

— detection means (20, 21, 48) for converting the received gamma rays into electric pulses whose amplitudes are related to the energies of these gamma rays;

— discrimination means (23) for sorting these electric pulses according to their amplitudes in order to furnish information on the energy spectrum of the received gamma rays, said discrimination means (23) comprising means (24, 25) for separating the electric pulses, the amplitudes of which are included into two first contiguous windows ($S_4$—$S_5$; $S_5$—$S_6$) located on each side of a first predetermined value ($S_5$) and into two second contiguous windows ($S_8$—$S_9$; $S_9$—$S_{10}$) located on each side of a second predetermined value ($S_9$), said first and second predetermined values corresponding to the respective energy of two reference detected peaks (16, 17) included in the received gamma ray spectrum, at least one of the reference peaks being located in the spectrum of gamma rays coming from the formations and the other reference peak being located either in the spectum if the gamma rays coming from the formations or coming from the eventual auxiliary source, characterized in that it further comprises:

— means (28, 30, 33) for combining the pulses of said first and second windows in order to generate a first error signal (X), responsive to the shifts of both reference detected peaks compared to said first and second predetermined values, if these both peaks are present in the spectrum of received gamma rays, and responsive to the shift of the remaining detected peak if one of the peaks disappears; and

— means (34, 35, 36) controlled by said first error signal (X) for modifying the response of the measurement apparatus in order to establish a first stabilization of said response.

2. The apparatus according to claim 1, characterised in that the second predetermined value ($S_9$) corresponds to a second reference peak located within the gamma ray spectrum coming from the formations.

3. The apparatus according to claim 2, characterized in that the means (28, 30, 33) for generating the first error signal (X) includes means for furnishing the count rates of pulses falling within each of said first and second windows and means (30) for combining these count rates in order to furnish said first error signal (X).

4. The apparatus according to claim 3, characterized in that said means (30) for combining said count rates ($M_i$, $N_i$) are adpated to calculate the difference between the count rates of the two first contiguous windows ($S_4$—$S_5$; $S_5$—$S_6$) and the difference between the count rates of the two second contiguous windows ($S_8$—$S_9$; $S_9$—$S_{10}$) and to combine the two differences thus obtained so as to minimize the effects of the statistical variations of said count rates.

5. The apparatus according to claim 4, characterized in that said means (30) for combining said count rates are adapted further to calculate the sums of the count rates in the first and second contiguous windows; to calculate a first linear function of said differences; to calculate a second linear function of said sums; and to calculate the ratio ($F_i$) of the first function to the second function in order to obtain the first error signal (X).

6. The apparatus according to claim 5, characterized in that said means (30) combining said count rates are adapted to calculate said first function by carrying out a weighted sum of said differences of the count rates and to calculate said second function by carrying out a weighted sum of said sums of the count rates.

7. The apparatus according to claim 6, characterized in that said means (30) for combining said count rates are adapted to weight each of said differences of the count rates by a factor ($H_i$) predetermined according to the central energy ($E_i$) of the corresponding reference peak, the width of the windows corresponding to this reference peak, and the resolution ($r_i$) of the detection means.

8. The apparatus according to claim 7, wherein said means (30) for combining said count rates are adapted to weight each of said sums of the count rates by a second predetermined factor equal to the square of the weighting factor applied to the corresponding difference of said count rates.

9. The apparatus according to any one of claims 3, 4, 5, 6, 7 or 8, characterized in that the means (33) for generating the first error signal (X) comprises means (34, 35) for correcting said count rates to take into account the background.

10. The apparatus according to one of claims 2 to 8, the two peaks being located in the spectrum of gamma rays coming from the formations, characterized by further comprising a second auxiliary source (40) which emits monoenergetic gamma rays outside of the investigated range of gamma rays coming from the geological formations, as well as means (41—47) sensitive to the gamma rays emitted by this second auxiliary source (40) for modifying the response of said measurement apparatus so as to carry out a second stabilization of the response of said response.

11. The apparatus according to claim 10, characterized in that it comprises discrimination circuit (43, 44) for separating the electric pulses whose amplitudes fall within two third contiguous windows ($S_{12}$—$S_{13}$; $S_{13}$—$S_{14}$) located on each side of a third determined value corresponding to the peak of gamma rays (60 kev) emitted by the second auxiliary source (40), and in that said means (41—47) for carrying out the second stabilization comprises means for combining the pulses of said third contiguous windows in order to generate a second error signal, and means (48—47) controlled by the second error signal for modifying the response of said measurement apparatus.

12. The apparatus according to claim 11, characterized in that said means (45, 47) controlled by the second error signal are adapted to modify the gain of said detection means (20, 21, 48).

13. The apparatus according to claim 12, characterized in that the means controlled by the first error signal (X) are adapted to modify certain comparison thresholds of said discrimination means (23) so that the modification of said thresholds have no influence on said second error signal.

14. A method for measuring gamma rays received in a borehole unit, said borehole being drilled in geological formations, said received gamma rays being constituted, on the one hand, of gamma rays, hereinafter called gamma rays coming from the formations and which are due exclusively to natural radioactivity of said geological formations or resulting from irradiation of said formations by a neutron or gamma rays source, on the other hand, of gamma rays coming from an eventual first auxiliary gamma rays source, said method comprising the following steps:

— converting the received gamma rays into electric pulses whose amplitudes are related to the energies of these gamma rays,
— classifying these electric pulses according to their amplitudes in order to furnish informations on the energy spectrum of the received gamma rays, and especially separating the electric pulses the amplitude of which are included into two first contiguous windows ($S_4$—$S_5$; $S_5$—$S_6$) located on each side of a first predetermined value ($S_5$) and into two second contiguous windows ($S_8$—$S_9$; $S_9$—$S_{10}$) located on each side of a second predetermined value ($S_9$), these first and second predetermined values corresponding to the respective energy of two reference detected peaks in the spectrum of the received gamma rays; one of the reference peaks being located in the detected spectrum of gamma rays coming from the formations and the other reference peak being either located in the spectrum of the gamma rays coming from the formations, or coming from the first auxiliary eventual source, characterized in that it further includes the following steps:
— combining the pulses of said first and second windows in order to generate a first error signal (X) responsive to the shifts of the reference detected peaks compared to said first and second predetermined values if both peaks are present in the spectrum of received gamma rays, and responsive to the shift of the remaining peak if one of the peaks disappears; and
— modifying at least one of the above mentioned measuring step thanks to said first error signal (X) in order to stabilize said measurement.

15. The method according to claim 14, characterized in that the other reference peak is located within the gamma ray spectrum coming from the formations.

16. The method according to claim 15, characterized in that the first error signal generation step comprises the following steps:

— producing the count rates of the pulses falling within each of said windows;
— calculating the sums and differences of the count rates respectively in the two first contiguous windows and the two second contiguous windows; and
— calculating the ratio beteen a first linear function of said differences and a second linear function of said sums in order to obtain said first error signal.

17. The method according to claim 16, characterized in that said first linear function is calculated by carrying out a weighted sum of said differences of the count rates and said second linear function is calculated by carrying out a weighted sum of said sums of the count rates.

18. The method according to claim 17, characterized in that the weighting factors used for calculating the first linear function are predetermined factors depending on the central energy of the corresponding reference peak, the width of the windows corresponding to this reference peak and the resolution obtained for converting the received gamma rays into pulses.

19. The method according to claim 18, characterized in that the weighting factors used for calculating the second linear function are taken equal to the squares of the weighting factors used for calculating the first linear function.

20. The method according to any one of claims 16, 17, 18 or 19, characterized in that it further comprises a step consisting in correcting the count rates to take into account the background.

21. The method according to any one of claims 15, 16, 17, 18, 19 or 20, characterized in that it further comprises the following steps:

— emitting thanks to a second auxiliary gamma rays source monoenergetic gamma rays outside of the investigated range of gamma rays coming from the formations; and
— modifying at least one of the measuring step in response to the detected monoenergetic gamma rays in order to carry out a second stabilization of said measurement.

22. The method according to claim 21, characterized in that it comprises the following steps:

— separating the electric pulses the amplitudes of which are included into two third contiguous windows located on each side of a third determined value corresponding to the peak of the gamma rays emitted by the second auxiliary source, and

— combining the pulses of said third windows in order to generate a second error signal to carry out said second stabilization.

23. The method according to claim 22, characterized in that it comprises the step consisting in modifying, by the second error signal, said step for converting the gamma rays into electric pulses.

24. The method according to claim 23, characterized in that it comprises the step consisting in modifying, by the first error signal, certain comparison thresholds of said electric pulse sorting step.

**0 043 313**

**FIG.1**

TRANSMISSION — 27
ADDITIONS ET MEMOIRES — 28
t
TRAI-TEMENT — 30
ENREGISTR. — 31
T, U, K, GRtot
T, U, K
MK, NK, MT, NT
STABILISAT. — 33
x
32
14 — 13, 12
15, 11
INTEGR. — 47
26 — TRANSMISSION
C.N.A. — 46
34 — C.N.A.
COMPT-DEC. — 45
LOGIQUE DE SELECTION — 44
35 — FILTRE P.B.
25 — LOGIQUE DE SELECTION
H.T. — 48
COMPARAT. — 42
REF. — 37
SOUST. — 36
23 — COMPARATEURS — 24
X10 — 41
P.M. — 21
SCIN — 20
40
22

1

FIG.2

$\Sigma_1 = \Sigma (Mi - Ni)/Hi$

$\Sigma (Mi + Ni)/Hi^2 = \Sigma_2$

FIG.3

FIG.4